# EUROPÄISCHE PATENTSCHRIFT

(11) **EP 2 924 462 B1**
(45) Veröffentlichungstag und Bekanntmachung des Hinweises auf die Patenterteilung: **13.09.2017**
(21) Anmeldenummer: 15160462.6
(22) Anmeldetag: 24.03.2015
(51) Int. Cl.: G01S 17/10, G01S 17/46, G01N 21/17, G01S 7/487, G01S 7/497, G01S 7/48

(54) **Sensorsystem zur Erkennung der Eigenschaften einer Übertragungsstrecke**
SENSOR SYSTEM FOR DETECTION OF CHARACTERISTICS OF A TRANSMISSION LINK
SYSTÈME DE CAPTEUR DESTINÉ À LA RECONNAISSANCE DE PROPRIÉTÉS D'UNE VOIE DE TRANSMISSION

(30) Priorität: 25.03.2014 EP 14161559
(43) Veröffentlichungstag der Anmeldung: 30.09.2015
(73) Patentinhaber: Elmos Semiconductor Aktiengesellschaft, 44227 Dortmund (DE)
(72) Erfinder: Melcher, Rolf, 76669 Bad Schönborn (DE); Münzer, Roland, 75179 Pforzheim (DE)
(74) Vertreter: Durm & Partner

(56) Entgegenhaltungen:
- EP-A1- 2 653 885
- WO-A1-2008/092611
- US-A1- 2011 205 521
- DAVID DUPUY ET AL: "Analysis of an avalanche photodiode used as an optoelectronic mixer for a frequency modulated continuous wave laser range finder; Avalanche photodiode working as an optoelectronic mixer", JOURNAL OF OPTICS. A, PURE AND APPLIED OPTICS, INSTITUTE OF PHYSICS PUBLISHING, BRISTOL, GB, Bd. 4, Nr. 6, 1. November 2002 (2002-11-01), Seiten S332-S336, XP020080994, ISSN: 1464-4258, DOI: 10.1088/1464-4258/4/6/377

## Beschreibung

Die vorliegende Erfindung betrifft ein Sensorsystem zur Ermittlung der Eigenschaften einer Übertragungsstrecke zwischen einem Sender und einem Empfänger oder zur Ermittlung der Eigenschaften eines Objekts in der Übertragungsstrecke. Das Sensorsystem basiert auf einer rückkoppelnden Regelung. Es umfasst den Sender, der mit einem Sendespeisesignal angesteuert wird und ein Sendesignal in die Übertragungsstrecke sendet, und eine Kompensationseinheit, die mit einem Kompensationsspeisesignal gespeist wird und ein Kompensationssignal erzeugt. Der Empfänger des Sensorsystems empfängt auch das vom Sender ausgesandte Sendesignal nach Durchgang durch wenigstens einen Teil der Übertragungsstrecke und optional nach zusätzlicher Beeinflussung durch ein Objekt in der Übertragungsstrecke und gibt ein Empfängerausgangssignal aus. In einer Signalerzeugungseinheit des Sensorsystems wird das Sendespeisesignal oder das Kompensationsspeisesignal erzeugt. Eine Verarbeitungseinheit des Sensorsystems verarbeitet das Empfängerausgangssignal des Empfängers weiter und erzeugt ein Regelwertsignal.

Eine Rücktransformationseinheit des Sensorsystems führt mit dem Regelwertsignal oder einem weiterverarbeiteten Regeiwertsignal eine Rücktransformation durch, so dass eine Regelschleife gebildet wird und das von der Rücktransformationseinheit erzeugte Signal dem Sender oder dem Kompensationssender zugeführt wird.

Aus dem Stand der Technik sind eine ganze Reihe verschiedener Verfahren zum Erkennen eines Objekts in einer optischen Übertragungsstrecke oder zur Ermittlung dessen Eigenschaften bekannt. Einige dieser Verfahren beruhen auch auf einer kompensierenden Regelung.

Zu nennen sind hier beispielhaft:
DE102012024597.1
DE102013013664.4
WO2013124018
DE10001955A1
DE10024156A1
DE19839730C1
DE9309837U1
DE10001943C1
DE10346741B3
DE102004025345B3
DE102005013352A1
DE102005010745B3
DE102007005187B4
WO 2008/092611A1

Den hier genannten Verfahren ist gemeinsam, dass sie im Eingangszweig typischerweise zusätzliche Verstärker erfordern. Zudem sind die Systeme nicht nur relativ langsam in der Messung sondern insbesondere in Folge des 1/f Rauschens und der nachfolgenden Verstärkung dieses Rauschens zum Teil störanfällig.

Aufgabe der Erfindung ist es, ein Sensorsystem vorzuschlagen, das im Vergleich zu den bekannten Systemen verbessert ist und insbesondere schneller reagiert und zuverlässiger ist.

Gelöst wird die vorliegende Aufgabe durch ein System mit den Merkmalen des Anspruchs 1. Besondere Bevorzugungen sind in den Unteransprüchen definiert.

Das erfindungsgemäße Sensorsystem zur Ermittlung der Eigenschaften einer Übertragungsstrecke zwischen einem Sender und einem Empfänger oder zur Ermittlung der Eigenschaften eines Objektes in einer Übertragungsstrecke basiert auf einer rückkoppelnden Regelung und einem Regelkreis. Das System umfasst den Sender, der mit einem Sendespeisesignal angesteuert wird und ein Sendesignal in die Übertragungsstrecke sendet, das von dem Empfänger empfangen wird. Das ausgesendete Sendesignal durchläuft wenigstens einen Teil der Übertragungsstrecke und wird gegebenenfalls durch das optional in der Übertragungsstrecke vorhandene Objekt oder durch mehrere in der Übertragungsstrecke vorhandene Objekte beeinflusst. Der Empfänger gibt daraufhin ein Empfängerausgangssignal aus, das in einer Verarbeitungseinheit weiterverarbeitet wird. Die Weiterverarbeitungseinheit erzeugt ein Regelwertsignal. Selbstverständlich können in dem Sensorsystem mehrere Sender und Empfänger vorhanden sein.

Eine Kompensationseinheit des Sensorsystems wird mit einem Kompensationsspeisesignal gespeist und erzeugt ein Kompensationssignal. Dieses Kompensationssignal wird dem Empfängerausgangssignal des Empfängers überlagert. Das Sendespeisesignal oder das Kompensationsspeisesignal werden von einer Signalerzeugungseinheit erzeugt, die bevorzugt ein Generator ist. Eine Rücktransformationseinheit verarbeitet das Regelwertsignal oder ein darauf basierendes Signal insofern weiter, dass eine Rücktransformation durchgeführt wird. Wenn die Signalerzeugungseinheit das Kompensationsspeisesignal erzeugt, ist die Rücktransformation eine Senderücktransformation, wobei in der Rücktransformationseinheit das Sendespeisesignal erzeugt wird. Wird in der Signalerzeugungseinheit das Sendespeisesignal erzeugt, wird die Rücktransformation als eine Kompensationsrücktransformation ausgeführt und das Kompensationsspeisesignal erzeugt. Mischformen sind denkbar, bei denen beide Speisesignale oder jeweils Teile von ihnen in der Rücktransformationseinheit erzeugt werden.

Die Überlagerung des Kompensationssignals mit dem Empfängerausgangssignal kann auf unterschiedliche Arten und Weisen erfolgen. Dabei kommt es darauf an, dass dem Empfängerausgangssignal das Kompensationssignal überlagert ist, bevor es im Signalverarbeitungsablauf in einer weiteren Komponente des Sensorsystems weiterverarbeitet wird. Das Kompensationssignal kann beispielsweise am Ausgang des Empfängers zu dem Empfängerausgangssignal hinzuaddiert werden. Alternativ kann das Kompensationssignal dem Empfänger direkt zugeführt werden und in dem Empfänger dem zu verarbeitenden Signal (Sendesignal des Senders) überlagert werden. Auch so entsteht ein Signal bei dem Empfängerausgangssignal und Kompensationssignal überlagert sind.

In einer bevorzugten Ausführungsform umfasst die Kompensationseinheit des Sensorsystems einen Kompensationssender. Das Kompensationsspeisesignal wird bevorzugt dem Kompensationssender zugeführt, der das Kompensationssignal an den Empfänger sendet, so dass sich das Sendesignal des Senders und das Kompensationssignal am Eingang des Empfängers überlagern, bevorzugt summierend oder multiplizierend. Das überlagerte Eingangssignal wird in dem Empfänger verarbeitet, so dass das Empfängerausgangssignal mit dem Kompensationssignal überlagert ist.

Das von dem Sensorsystem erzeugte Regelwertsignal ist ein Maß für eine Eigenschaft der Übertragungsstrecke und/oder eine Eigenschaft des Objekts in der Übertragungsstrecke. Das Signal kann bei Vorhandensein von mehreren Objekten auch Informationen über mehrere Objekte enthalten und somit ein Maß für die Eigenschaft mehrerer Objekte sein.

Erfindungsgemäß ist der Empfänger eine Avalanche-Diode. Die Avalanche-Diode weist eine interne Verstärkung auf, so dass sie auch zur Detektion von kleinen Sendesignalen geeignet ist. Die direkt in der Avalanche-Diode erfolgende Verstärkung des Empfangssignals, das an der Diode anliegt, führt zu einem geringen Rauschen in der Avalanche-Diode. Gleichzeitig bietet die Avalanche-Diode jedoch eine große Bandbreite.

Insbesondere kann die Avalanche-Diode als Avalanche-Photodiode ausgebildet sein. Sie ist eine hochempfindliche und schnelle Photodiode und reagiert deutlich schneller als herkömmliche Photodioden. Im Rahmen der Erfindung wurde erkannt, dass der Lawinendurchbruch in der Avalanche-Diode (Avalanche-Effekt) zur internen Verstärkung genutzt werden kann. Somit ist der Empfänger gegenüber herkömmlichen Empfängern nicht nur deutlich schneller, sondern auch sensitiver. Die Avalanche-Dioden können im sichtbaren Bereich oder auch im Infrarotbereich arbeiten.

Es ist auch denkbar, ein Feld mit mehreren integrierten Avalanche-Photodioden zu bilden. In diesem Fall können die sogenannten Quadraturkomponenten unterschiedliche Frequenzen parallel verarbeiten. Hierdurch erfolgen eine noch schnellere Verarbeitung und eine kürzere Reaktionszeit des Systems. Damit ist es möglich, auch mehrere Objekte in einer Übertragungsstrecke zu erkennen und deren Eigenschaften zu ermitteln. In einigen Fällen genügt es auch, wenn die Eigenschaften eines Objekts in der Übertragungsstrecke erkannt werden, während für die anderen Objekte lediglich das Vorhandensein erkannt werden muss. Hier sind diverse Konstellationen möglich, so dass beispielsweise die Eigenschaften von einem oder zwei Objekten erkannt werden können, während weitere Objekte nur insoweit detektiert werden, dass ihre Anwesenheit festgestellt wird.

Erfindungsgemäß wird das Empfängerausgangssignal der Avalanche-Diode durch Modulation der Sperrspannung gewandelt. Durch die Modulation der Sperrspannung wird eine Spannungsdrift der Avalanche-Diode verhindert. Insbesondere kann auch durch das Anlegen und Variieren der Sperrspannung die Spannungsdrift innerhalb der Avalanche-Diode gewollt beeinflusst werden. Die Sperrspannung der Avalanche-Diode wird mit einem Speisesignal gesteuert, das von der Signalerzeugungseinheit erzeugt wird. Bevorzugt wird zur Regelung das Sendespeisesignal verwendet.

Erfindungsgemäß wird die Sperrspannung der Avalanche-Diode mit einer vorbestimmten Modulationsfrequenz moduliert. Hierzu wird die Frequenz des Speisesignals verwendet, das von der Signalerzeugungseinheit, also einem Generator, erzeugt wurde. Bevorzugt wird hierbei die Frequenz des Sendespeisesignals für die Modulation benutzt, insbesondere da in der bevorzugten Ausführungsform das Sendespeisesignal für die Modulation der Sperrspannung verwendet wird.

In einer besonderen Ausführungsform wird das Empfängerausgangssignal der Avalanche-Diode durch Modulation der Sperrspannung mit einer vorbestimmten Modulationsfrequenz auf eine vordefinierte Zwischenfrequenz gewandelt. Im Rahmen der Erfindung wurde festgestellt, dass es in einigen Fällen zu einer Drift der DC-Spannung der Avalanche-Diode kommen kann. Es hat sich herausgestellt, dass eine Modulation auf eine vorbestimmte Zwischenfrequenz günstig sein kann. Im Rahmen der Erfindung sind in einigen Konstellationen Fälle aufgetreten, in denen durch die Modulation der Sperrspannung mit einer Frequenz, die gleich der Frequenz des Sendesignals ist, ein Gleichsignal am Empfängerausgang gebildet wird. Dieses Gleichsignal wurde dem Empfängerausgangssignal beigemischt und konnte nur schwer abgetrennt werden. Derartige Effekte traten insbesondere im Sättigungsbereich auf, beispielsweise wenn die Diode durch extrem starke Sonneneinstrahlung bestrahlt oder ihr ausgesetzt wurde oder wenn Temperatureffekte auftraten. In diesem Fall hat es sich als vorteilhaft erwiesen, das Empfängerausgangssignal auf eine vordefinierte Zwischenfrequenz zu modulieren. Bevorzugt ist die Zwischenfrequenz von Null Hz verschieden. So konnte eine einfache Abtrennung der durch DC-Effekte erzeugten Gleichspannung von dem mit der Zwischenfrequenz als Trägerfrequenz modulierten Nutzsignal des Empfängerausgangssignals erfolgen.

In einer bevorzugten Ausführungsform des Sensorsystems umfasst die Verarbeitungseinheit des erfindungsgemäßen Sensorsystems einen Verstärker, in dem das Empfängerausgangssignal verstärkt wird.

In einer weiter bevorzugten Ausführungsform wird das Empfangssignal, das von der Avalanche-Diode empfangen wird, direkt in der Avalanche-Diode nicht nur verstärkt sondern auch demoduliert. Die Demodulation erfolgt insbesondere dann, wenn die Speisesignale der Sender zur Demodulation verwendet werden und der Avalanche-Diode zugeführt werden.

In einer bevorzugten Ausführungsform des Sensorsystems ist die Signalerzeugungseinheit (Generator) ein Wavelet-Generator. Der Wavelet-Generator erzeugt ein Paar von Wavelets, die zu dem Speisesignal weiterverarbeitet werden, insbesondere zu dem Senderspeisesignal.

Das Senderspeisesignal kann bevorzugt durch eine gewichtete oder durch eine ungewichtete Summierung aus mehreren Wavelet-Signalen gebildet werden. Hierdurch lassen sich nahezu beliebige Signale (Funktionen) mit den jeweils gewünschten Eigenschaften erzeugen.

Bevorzugt besteht beispielsweise ein Paar erzeugter Wavelets aus einer Sinusfunktion und einer dazu orthogonalen Cosinusfunktion. Dies ist insbesondere dann vorteilhaft, wenn im weiteren Verlauf der Signale im erfindungsgemäßen Sensorsystem eine Verarbeitung im Frequenzbereich durchgeführt wird, wozu eine Fast-Fourier-Transformation und eine inverse Fast-Fourier-Transformation eingesetzt werden.

Die Verwendung eines Wavelet-Generators, die Generierung der Speisesignale aus den Wavelets und die Verarbeitung der Signale im Frequenzbereich sind dem Fachmann bekannt und jedenfalls in den EP-Anmeldungen mit den Anmeldenummern 14 161 533.4, 14 161 556.7 und 14 161 559.1 ausführlich beschrieben. Der Inhalt dieser Anmeldungen wird jedenfalls insoweit zum Inhalt der vorliegenden Anmeldung gemacht. Die Anmeldungen sind zum Anmeldetag dieser Anmeldung noch nicht veröffentlicht.

Bei einer bevorzugten Ausbildung des Sensorsystems wird in die Zwischenfrequenz der Avalanche-Diode auf Basis des Speisesignals auf dem Wavelet-Signal und der Modulationsfrequenz des Speisesignals ermittelt. Die von dem Wavelet-Generator erzeugten Wavelet-Signale sind dann bevorzugt auf die Zwischenfrequenz der Avalanche-Diode abgestimmt.

In einer bevorzugten Ausführungsform umfasst das Sensorsystem einen Filter, der das Regelwertsignal zu einem Filterausgangssignal umwandelt und weiterverarbeitet und einem Sender, insbesondere dem Kompensationssender als Speisesignal zuführt. Bevorzugt kann dieses Signal noch durch einen Offset eines Offset-Generators angehoben werden.

In einer bevorzugten Ausführungsform weist das Sensorsystem einen Filter auf, der das Regelwertsignal zu einem Filterausgangssignal weiterverarbeitet und umwandelt. Das Filterausgangssignal wird weiterverarbeitet und bevorzugt den Kompensationssendern zugeführt oder im Falle einer Senderücktransformation dem Sender und zu dem Sendespeisesignal weiterverarbeitet.

Erfolgt in dem Sensorsystem eine Rückführung des Kompensationsspeisesignals sind drei mögliche Ausführungen denkbar:
Zum einen kann das Kompensationsspeisesignal mit einer ersten Kompensationsfilterfunktion verstärkt und gegebenenfalls gefiltert werden. Es wird als erstes Kompensatorsignal über einen Kompensationssender und eine dritte Übertragungsstrecke summierend oder multiplizierend überlagernd zum Empfänger gesendet. Der Empfänger empfängt also das vom Sender ausgesandte Sendesignal, das wenigstens teilweise durch die Übertragungsstrecke gesendet wird sowie das von dem Kompensationssender ausgesandte Signal. Das Empfängerausgangssignal umfasst dann sowohl das empfangene Kompensatorsignal wie auch das Sendesignal. Diese Variante ist bevorzugt.

Alternativ kann das Kompensationsspeisesignal mit einer zweiten Kompensationsfilterfunktion verstärkt oder optional gefiltert werden und als zweites Kompensatorsignal summierend oder multiplizierend überlagernd direkt in den Empfänger hineingeleitet werden. Das Kompensatorsignal wird innerhalb der Avalanche-Diode summierend (bei einem Addierglied) oder multiplizierend (bei einem Multiplizierglied) überlagert. In dieser gleichwertigen Variante kann auf den Kompensationssender verzichtet werden. Die Kompensation erfolgt dennoch im Empfänger.

In einer dritten, ebenfalls gleichwertigen Variante kann das Kompensationsspeisesignal mit einer dritten Kompensationsfilterfunktion verstärkt und/oder optional gefiltert werden und als drittes Kompensatorsignal summierend einem Addierer zugeleitet werden. In dem Addierer wird das dritte Kompensatorsignal mit dem Empfängerausgangssignal überlagert, verarbeitet und der Verarbeitungseinheit zugeführt. Die Kompensation erfolgt in der Verarbeitungskette nach dem Empfänger. Auf den Kompensationssender kann verzichtet werden.

Bevorzugt kann das (rückgeführte) Speisesignal mit einem Offset beaufschlagt werden. Das Speisesignal kann entweder das Sendespeisesignal oder das Kompensatorspeisesignal sein, entweder vom Generator erzeugt oder rückgeführt. Bevorzugt wird das rückgeführte Speisesignal mit einem Offset beaufschlagt. Bevorzugt erfolgt eine Addition des Offset-Signals eines Offset-Generators mit dem entsprechenden Speisesignal. Es können auch beide Speisesignale einen Offset haben.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Es zeigen:
- Figur 1: ein Sensorsystem mit einer Avalanche-Diode (AVD) mit einer Regelung eines Kompensationssenders; und
- Figur 2: eine Ausführungsform des Sensorsystems mit Regelung des Senders.

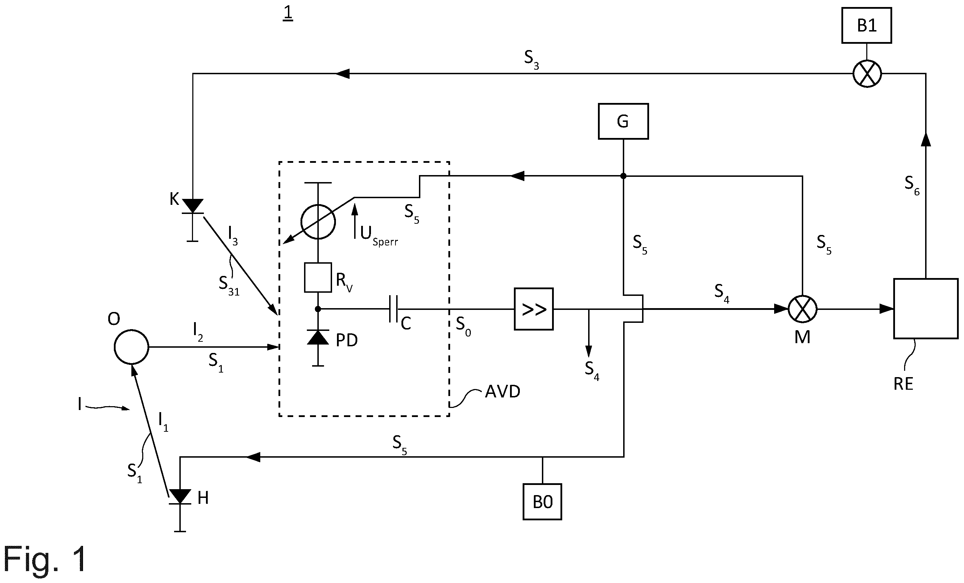

Fig. 1 zeigt schematisch ein erfindungsgemäßes Sensorsystem 1, das aus einer kompensierenden Regelung basiert. Die schematische Zeichnung enthält nur die wichtigsten Elemente, die einem Fachmann das grundlegende Verständnis der erfindungsgemäßen Vorrichtung erlauben sollen. Ein Sender H, hier beispielsweise in Form einer LED oder einer anderen Lichtquelle, wird mit einem Sendespeisesignal S5 von einem Generator G angesteuert. Der Generator G ist die Signalerzeugungsquelle des Sensorsystems 1. Das Sendespeisesignal S5 kann vorzugsweise bandbegrenzt sein und eine obere Grenzfrequenz fₘₐₓ und eine Mittelfrequenz f₀ und eine untere Grenzfrequenz fₘᵢₙ aufweisen. Bevorzugt ist dabei fₘᵢₙ ≥ (fₘₐₓ - fₘᵢₙ) / 2. Das Senderspeisesignal S5 kann optional mittels eines Offset-Signals, das in einem Offset-Generator erzeugt wird, überlagert sein. Dies ist insbesondere bei Lichtquellen als Sender notwendig, da kein "negatives Licht" erzeugt werden kann.

Der Sender H sendet ein Sendesignal S1 in die Übertragungsstrecke I, die aus einer ersten Übertragungsstrecke I1 und einer zweiten Übertragungsstrecke I2 besteht. In der Übertragungsstrecke ist ein Objekt O angeordnet, das das Sendesignal S1 beeinflusst. Nach Durchgang wenigstens eines Teils der Übertragungsstrecke I, hier jedoch nach Durchgang der gesamten Übertragungsstrecke I, wird das Sendesignal an einem Empfänger E empfangen, der als Avalanche-Diode AVD ausgeführt ist.

Die Avalanche-Diode AVD umfasst bevorzugt einen Photoempfänger, z. B. eine Photodiode PD, eine Kapazität C, einen Vorwiderstand Rᵥ, und eine Spannungsquelle Uₛₚₑᵣᵣ. Optional kann in der Avalanche-Diode auch eine Linearform integriert sein, die beispielsweise ein Addierglied oder ein Multiplizierglied sein kann. Die regelbare Spannungsquelle Uₛₚₑᵣᵣ wird mittels des Generators G geregelt.

Da die Avalanche-Diode AVD eine Verstärkung erzeugen kann, kann optional auch die Verarbeitungseinheit, die in diesem Fall als Verstärker V ausgebildet ist, in die Avalanche-Diode integriert sein. In besonderen Ausführungsformen kann auch ein weiteres Multiplizierglied integriert sein, so dass das interne Signal der Avalanche-Diode AVD nach Verstärkung mit dem Generatorsignal multipliziert wird. In diesem Fall muss das am Verstärkerausgang anliegende Regelwertsignal S4 separat aus der Avalanche-Diode herausgeführt werden, da dieses Signal ein Maß für die Eigenschaften der Übertragungsstrecke I oder eines Objekts O in der Übertragungsstrecke I ist. In dem Fall, in dem eine Multipliziereinheit in der Avalanche-Diode AVD integriert ist, erfolgt die Demodulation direkt in der Avalanche-Diode.

In der Ausführungsform gemäß Fig. 1 ist die Verarbeitungseinheit V und das Multiplizierglied M nicht in die Avalanche-Diode integriert. Das Ausgangssignal S0 der Avalanche-Diode AVD wird in der Verarbeitungseinheit, also in dem Verstärker V verstärkt und steht an dessen Ausgang als Regelwertsignal S4 zur Verfügung. Das Signal S4 ist ein Maß für die Eigenschaften der Übertragungsstrecke oder des in der Übertragungsstrecke angeordneten Objekts.

Das Regelwertsignal S4, das in seiner Funktion innerhalb des Regelkreises der eines Fourier-Koeffizienten bezogen auf das Sendespeisesignal S5 entspricht, wird nun mit dem Senderspeisesignal S5 in der Multipliziereinheit M multipliziert und somit zurücktransformiert. Es entsteht ein Vorsignal S6, das bevorzugt mit einem Offset-Signal eines Offset-Generators B1 multipliziert wird und dann als Kompensationsspeisesignal S3 zu einer Kompensationseinheit geführt wird, die ein Kompensationssignal erzeugt. Die Kompensationseinheit ist als Kompensationssender K ausgebildet, das Kompensationssignal S 31 über eine dritte Übertragungsstrecke I3 direkt an den Empfänger D, also an die Avalanche-Diode AVD, sendet. Die Signale S4, S3 und S6 können in besonderen Ausführungsformen auch als digitale Signale, beispielsweise in Form von Bussen ausgeführt sein.

Durch die Regelschleife und Kompensation über den Kompensationssender K wird das Empfängerausgangssignal S0 am Ausgang der Avalanche-Diode AVD bis auf einen Regelfehler bei Änderung der durch den Empfänger empfangenen physikalischen Größe (Sendesignal S1, z. B. sichtbares oder unsichtbares Licht) durch die Regelschleife mittels des Kompensationsspeisesignals S3 zurückgeführt. Das Regelwertsignal S4 der Regelschleife repräsentiert den Messwert des Sensors. Die Sensitivität des Empfängers D wird über das Sendespeisesignal S5 erzeugt.

In dieser rückkoppelnden Regelung wird das eingestrahlte Sendesignal S1 durch Anpassung der Empfängersensitivität über das Sendespeisesignal S5 und durch die Rückführungsschleife über das Kompensatorsignal so kompensiert, dass das Empfängerausgangssignal S0 bis auf einen Regelfehler und das Systemrauschen ein Gleichsignal ist, bevorzugt gleich Null ist. Dies gilt, wenn der Regelkreis eingeschwungen ist.

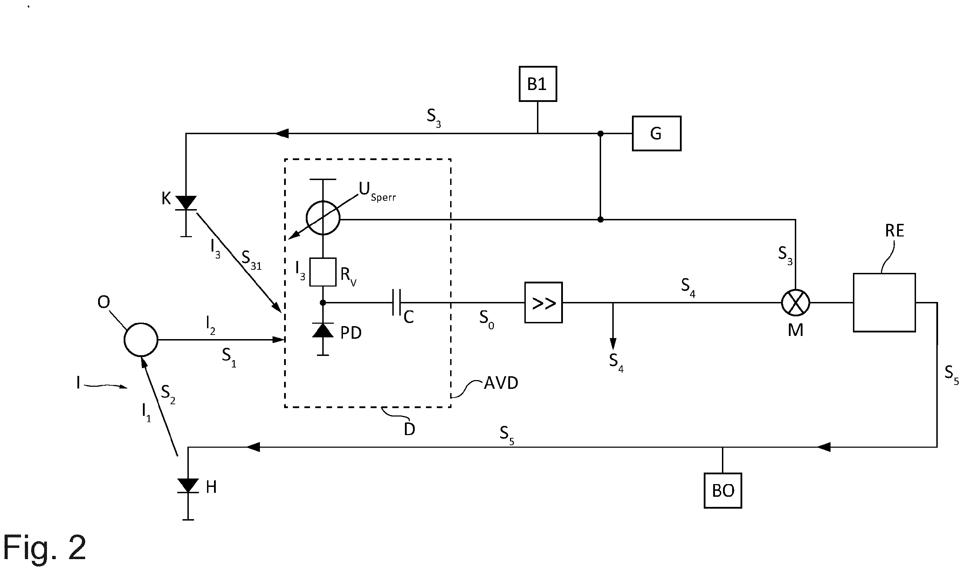

Fig. 2 zeigt eine alternative Ausführungsform des Sensorsystems mit einem Regelkreis, bei dem der Generator G das Kompensationsspeisesignal S3 erzeugt, das dem Kompensationssender K zugeführt wird. Das Kompensationsspeisesignal S3 wird mit einem Offset-Signal aus einem Offset-Generator B1 überlagert und somit angehoben. Der Kompensationssender K sendet ein Kompensationssignal S 31 durch die Übertragungsstrecke I3 an den Empfänger, also an die Avalanche-Diode AVD und gelangt an dessen Photodiode PD. Das Kompensatorspeisesignal S3 wird auch der Avalanche-Diode AVD zugeführt, wodurch die Sperrspannung Uₛₚₑᵣᵣ moduliert werden kann. Das Ausgangssignal der Avalanche-Diode AVD, das das Empfängerausgangssignal S0 bildet, wird in einer als Verstärker V ausgebildeten Verarbeitungseinheit verstärkt, so dass das Regelwertsignal S4 gebildet wird. Dieses ist, wie in dem Regelkreis gemäß Fig. 1, ebenfalls ein Maß für die Eigenschaften der Übertragungsstrecke oder eines Objekts in der Übertragungsstrecke.

Das Regelwertsignal S4 wird in einer Multiplikationseinheit M mit dem Kompensatorspeisesignal S3 überlagert, wodurch ein Speisesignal S5 für den Sender H gebildet wird. Dieses Senderspeisesignal S5 wird optional mit einem Offset aus einem Offset-Generator B0 überlagert, bevor es zu dem Sender H gelangt.

Der Sender H sendet ein Sendesignal S1 in die Übertragungsstrecke I, so dass das Sendesignal nach Durchgang des ersten Teils der Übertragungsstrecke (erste Übertragungsstrecke I1) von einem in der Übertragungsstrecke I befindlichen Objekt O beeinflusst wird und dann über den zweiten Teil (Übertragungsstrecke I2) zu dem Empfänger gelangt.

Auch hier findet wieder eine kompensierende Regelung statt, so dass im Empfänger D ein Gleichsignal ausgegeben wird und das Empfängerausgangssignal S0 bis auf einen Regelfehler und das Systemrauschen keine Anteile des Kompensatorspeisesignals S3 enthält.

## Patentansprüche

1. Sensorsystem zur Ermittlung der Eigenschaften einer Übertragungsstrecke zwischen einem Sender und einen Empfänger oder zur Ermittlung eines Objektes in der Übertragungsstrecke, wobei das Sensorsystem auf einer rückkoppelnden Regelung basiert,
umfassend
- den Sender (H), der mit einem Sendespeisesignal (S5) angesteuert wird und ein Sendesignal (S1) in die Übertragungsstrecke (I) sendet,
- den Empfänger (D), der das vom Sender (H) ausgesandte Sendesignal (S1) nach Durchgang durch wenigstens einen Teil der Übertragungsstrecke (I) oder nach Durchgang durch wenigstens einen Teil der Übertragungstrecke (I) und Beeinflussung durch das Objekt (O) in der Übertragungsstrecke (I) empfängt und ein Empfängerausgangssignal (S0) ausgibt,
- eine Kompensationseinheit, die mit einem Kompensationsspeisesignal (S3) gespeist wird und ein Kompensationssignal (S31) erzeugt, das dem Empfängerausgangssignal überlagert ist,
- eine Verarbeitungseinheit, um das Empfängerausgangssignal (S0) weiter zu verarbeiten und ein Regelwertsignal (S4) zu erzeugen, eine Signalerzeugungseinheit (G), die das Sendespeisesignal (S5) oder das Kompensationsspeisesignal (S3) erzeugt,
und wobei
der Empfänger (D) eine Avalanche-Diode (AVD) ist,
**gekennzeichnet durch**
- eine Rücktransformationseinheit, die mit dem Regelwertsignal oder einem weiterverarbeiteten Regelwertsignal eine Rücktransformation durchführt, wobei
- die Rücktransformation eine Sende-Rücktransformation SRT ist und das Sendespeisesignal (S5) erzeugt, wenn in der Signalerzeugungseinheit (G) das Kompensationsspeisesignal (S3) erzeugt wird, oder
- die Rücktransformation eine Kompensation-Rücktransformation KRT ist und das Kompensationsspeisesignal (S3) erzeugt, das der Kompensationseinheit zugeführt wird, wenn die Signalerzeugungseinheit (G) das Sendespeisesignal (S5) erzeugt,
wobei
- das Regelwertsignal (S4) ein Maß für eine Eigenschaft der Übertragungsstrecke (I) und/oder des Objekts (O) in der Übertragungsstrecke (I) ist,
- die Sperrspannung der Avalanche-Diode (AVD) mit der Frequenz des von der Signalerzeugungseinheit (G) erzeugten Speisesignals (S3, S5) als Modulationsfrequenz moduliert wird.

2. Sensorsystem nach Anspruch 1, **dadurch gekennzeichnet, dass** das Empfängerausgangssignal (S0) der Avalanche-Diode (AVD) durch Modulation der Sperrspannung gewandelt wird, wobei durch die Modulation der Sperrspannung eine Spannungsdrift der Avalanche-Diode (AVD) verhindert wird.

3. Sensorsystem nach einem der vorherigen Ansprüche, **dadurch gekennzeichnet, dass** die Verarbeitungseinheit einen Verstärker (V) umfasst, in dem das Empfängerausgangssignal (S0) verstärkt wird.

4. Sensorsystem nach einem der vorherigen Ansprüche, **dadurch gekennzeichnet, dass** das Empfängerausgangssignal (S0) der Avalanche-Diode (AVD) durch Modulation der Sperrspannung mit einer vorbestimmten Modulationsfrequenz auf eine vordefinierte Zwischenfrequenz gewandelt wird.

5. Sensorsystem nach einem der vorherigen Ansprüche, **dadurch gekennzeichnet, dass** die Signalerzeugungseinheit ein Wavelet-Generator ist, der ein Paar von Wavelets erzeugt, die zu dem Sendesignal (S5) weiterverarbeitet werden, und dass bevorzugt das Paar der erzeugten Wavelets aus einer Sinus-Funktion und einer dazu orthogonalen CosinusFunktion besteht.

6. Sensorsystem nach einem der vorherigen Ansprüche, **dadurch gekennzeichnet, dass** ein Filter das Regelwertsignal (S4) zu einem FilterAusgangssignal umwandelt, das weiterverarbeitet und der Kompensationseinheit zugeführt wird.

7. Sensorsystem nach einem der vorhergehenden Ansprüche, **dadurch gekennzeichnet, dass** bei Rückführung des Kompensationsspeisesignals (S3)
- das Kompensationsspeisesignal (S3) mit einer ersten Kompensationsfilterfunktion verstärkt und/oder gefiltert wird und als erstes Kompensatorsignal über einen Kompensationssender (K) und eine dritte Übertragungsstrecke summierend oder multiplizierend überlagernd zum Empfänger (D) gelangt, und /oder
- das Kompensationsspeisesignal (S3) mit einer zweiten Kompensationsfilterfunktion verstärkt und/oder gefiltert wird und als zweites Kompensatorsignal summierend oder multiplizierend überlagernd direkt in den Empfänger (D) hinein geleitet wird, und/oder
- das Kompensationsspeisesignal (S3) mit einer dritten Kompensationsfilterfunktion verstärkt und/oder gefiltert wird und als drittes Kompensatorsignal summierend in einem Addierer mit dem Empfängerausgangssignal (S0) verarbeitet und der Verarbeitungseinheit zugeführt wird.

8. Sensorsystem nach einem der Ansprüche 1 bis 7, **dadurch gekennzeichnet, dass** die Kompensationseinheit ein Kompensationssender (K) ist, der mit dem Kompensationsspeisesignal (S3) gespeist wird und ein Kompensationssignal (S31) zu dem Empfänger (D) sendet.

9. Sensorsystem nach einem der vorherigen Ansprüche, **dadurch gekennzeichnet, dass** das rückgeführte Speisesignal mit einem Offset beaufschlagt wird, bevorzugt durch Addition eines Offsetsignals eines Offsetgenerators (B0, B1).

## Claims

1. Sensor system for determining the properties of a transmission path between a transmitter and a receiver or for determining an object in the transmission path, wherein the sensor system is based on a feedback control,
comprising
- the transmitter (H), which is triggered with a transmission feed signal (S5) and transmits a transmission signal (S1) into the transmission path (I),
- the receiver (D), which receives the transmission signal (S1) transmitted by the transmitter (H) after passing through at least one part of the transmission path (I) or passing through at least one part of the transmission path (I) and being influenced by the object (O) in the transmission path (I), and outputs a receiver output signal (S0),
- a compensation unit, which is fed with a compensation feed signal (S3) and generates a compensation signal (S31) superimposing the receiver output signal,
- a processing unit for further processing the receiver output signal (S0) and generating a control value signal (S4),
- a signal generation unit (G), which generates the transmission feed signal (S5) or the compensation feed signal (S3), and
wherein the receiver (D) is an Avalanche-Diode (AVD),
**characterized by**
- a reverse transformation unit, which performs a reverse transformation with the control value signal or a further processed control value signal, wherein
- the reverse transformation is a transmission reverse transformation SRT and generates the transmission feed signal (S5), when the compensation feed signal (S3) is generated in the signal generation unit (G), or
- the reverse transformation is a compensation reverse transformation KRT and generates the compensation feed signal (S3), which is fed into the compensation unit, when the signal generation unit (G) generates the transmission feed signal (S5),
wherein
- the control value signal (S4) is a measure for a property of the transmission path (I) and/or the object (O) in the transmission path (I),
- the cutoff voltage of the Avalanche-Diode (AVD) is modulated with the frequency of the feed signals (S3, S5) generated by the signal generation unit (G) as modulation frequency.

2. Sensor system according to claim 1, **characterized in that** the receiver output signal (S0) of the Avalanche-Diode (AVD) is converted by modulation of the cutoff voltage, wherein by the modulation of the cutoff voltage a voltage drift of the Avalanche-Diode (AVD) is prevented.

3. Sensor system according to any one of the preceding claims, **characterized in that** the processing unit comprises an amplifier (V), in which the receiver output signal (S0) is amplified.

4. Sensor system according to any one of the preceding claims, **characterized in that** the receiver output signal (S0) of the Avalanche-Diode (AVD) is converted to a predefined intermediate frequency by modulation of the cutoff voltage with a predefined modulation frequency.

5. Sensor system according to any one of the preceding claims, **characterized in that** the signal generation unit is a wavelet-generator generating a pair of wavelets, which are further processed into the transmission signal (S5), and **in that** preferably the pair of generated wavelets consists of a sine function and a cosine function orthogonal thereto.

6. Sensor system according to any one of the preceding claims, **characterized in that** a filter converts the control value signal (S4) into a filter output signal, which is further processed and fed into the compensation unit.

7. Sensor system according to any one of the preceding claims, **characterized in that** when feeding back the compensation feed signal (S3)
- the compensation feed signal (S3) is amplified and/or filtered with a first compensation filtering function and reaches the receiver (D) via a compensation transmitter (K) and a third transmission path as a first compensator signal being additively or multiplicatively superimposing, and /or
- the compensation feed signal (S3) is amplified and/or filtered with a second compensation filtering function and forwarded directly into the receiver (D) as a second compensator signal being additively or multiplicatively superimposing, and/or
- the compensation feed signal (S3) is amplified and/or filtered with a third compensation filtering function and forwarded to the processing unit as a third compensator signal additively processed with the receiver output signal (S0) in an adder.

8. Sensor system according to one of claims 1 to 7 **characterized in that** the compensation unit is a compensation transmitter (K), which is fed with the compensation feed signal (S3) and transmits a compensation signal (S31) to the receiver (D).

9. Sensor system according to any one of the preceding claims, **characterized in that** the fed back feed signal is appended with an offset, preferably by adding an offset signal of an offset generator (B0, B1).

## Revendications

1. Système capteur destiné à la détermination des caractéristiques d'une voie de transmission entre un émetteur et un récepteur ou à la détermination d'un objet sur la voie de transmission, le système capteur étant basé sur une régulation rétroactive, comprenant :
- l'émetteur (H), qui est commandé par un signal d'alimentation d'émission (S5) et émet un signal d'émission (S1) dans la voie de transmission (I),
- le récepteur (D), qui reçoit le signal d'émission (S1) émis par l'émetteur (H) après le passage par au moins une partie de la voie de transmission (I) ou après le passage par au moins une partie de la voie de transmission (I) et une influence exercée par l'objet (O) sur la voie de transmission (I) et émet un signal de sortie de récepteur (S0),
- une unité de compensation, qui est alimentée par un signal d'alimentation de compensation (S3) et génère un signal de compensation (S31) qui se superpose au signal de sortie de récepteur,
- une unité de traitement pour le traitement subséquent du signal de sortie de récepteur (S0) et pour générer un signal de valeur de réglage (S4),
- une unité de production de signal (G), qui génère le signal d'alimentation d'émission (S5) ou le signal d'alimentation de compensation (S3), et
dans lequel le récepteur (D) est une diode avalanche (AVD),
**caractérisé par**
- une unité de transformation inverse qui procède à une transformation inverse avec le signal de valeur de réglage ou un signal de valeur de réglage ayant subi un traitement subséquent,
- la transformation inverse étant une transformation inverse d'émission SRT et générant le signal d'alimentation d'émission (S5) lorsque le signal d'alimentation de compensation (S3) est généré dans l'unité de production de signal (G) ou
- la transformation inverse étant une transformation inverse de compensation KRT et générant le signal d'alimentation de compensation (S3) qui est amené à l'unité de compensation lorsque l'unité de production de signal (G) génère le signal d'alimentation d'émission (S5),
- le signal de valeur de réglage (S4) étant une mesure d'une caractéristique de la voie de transmission (I) et/ou de l'objet (O) sur la voie de transmission (I),
- la tension de blocage de la diode avalanche (AVD) est modulée avec la fréquence du signal d'alimentation (S3, S5) généré par l'unité de production de signal (G).

2. Système capteur selon la revendication 1, **caractérisé en ce que** le signal de sortie de récepteur (S0) de la diode avalanche (AVD) est converti par modulation de la tension de blocage, la modulation de la tension de blocage empêchant une dérive de tension de la diode avalanche (AVD).

3. Système capteur selon l'une des revendications précédentes, **caractérisé en ce que** l'unité de traitement comprend un amplificateur (V) dans lequel le signal de sortie de récepteur (S0) est amplifié.

4. Système capteur selon l'une des revendications précédentes, **caractérisé en ce que** le signal de sortie de récepteur (S0) de la diode avalanche (AVD) est converti par modulation de la tension de blocage avec une fréquence de modulation prédéterminée à une fréquence intermédiaire prédéfinie.

5. Système capteur selon l'une des revendications précédentes, **caractérisé en ce que** l'unité de production de signal est un générateur d'ondelettes qui génère une paire d'ondelettes qui sont ensuite traitées pour donner le signal d'émission (S5) et **en ce que** la paire d'ondelettes générées se compose préférentiellement d'une fonction sinus et d'une fonction cosinus qui lui est orthogonale.

6. Système capteur selon l'une des revendications précédentes, **caractérisé en ce qu'**un filtre convertit le signal de valeur de réglage (S4) en un signal de sortie de filtre qui subit un traitement subséquent et est amené à l'unité de compensation.

7. Système capteur selon l'une des revendications précédentes, **caractérisé en ce que**, au retour du signal d'alimentation de compensation (S3),
- le signal d'alimentation de compensation (S3) est amplifié et/ou filtré avec une première fonction de filtre de compensation et arrive au récepteur (D) avec superposition par addition ou multiplication d'une troisième voie de transmission en tant que premier signal compensateur via un émetteur de compensation (K) et/ou
- le signal d'alimentation de compensation (S3) est amplifié et/ou filtré avec une deuxième fonction de filtre de compensation et est acheminé directement dans le récepteur (D) avec superposition par addition ou multiplication en tant que deuxième signal compensateur et/ou
- le signal d'alimentation de compensation (S3) est amplifié et/ou filtré avec une troisième fonction de filtre de compensation et est traité en tant que troisième signal compensateur avec addition dans un additionneur avec le signal de sortie de récepteur (S0) et amené à l'unité de traitement.

8. Système capteur selon l'une des revendications précédentes 1 à 7, **caractérisé en ce que** l'unité de compensation est un émetteur de compensation (K) qui est alimenté avec le signal d'alimentation de compensation (S3) et qui envoie un signal de compensation (S31) au récepteur (D).

9. Système capteur selon l'une des revendications précédentes, **caractérisé en ce qu'**un offset est appliqué au signal d'alimentation de retour, de préférence par addition d'un signal d'offset d'un générateur d'offset (B0, B1).
